# EUROPÄISCHE PATENTANMELDUNG

(11) **EP 0 908 286 A1**
(43) Veröffentlichungstag der Anmeldung: **14.04.1999**
(21) Anmeldenummer: 98117032.7
(22) Anmeldetag: 09.09.1998
(51) Int. Cl.: B29C 33/38, B29C 33/00, B29C 44/58, B29C 67/00

(54) **Form zum Herstellen eines Partikelschaumstoff-Formkörpers und Verfahren zur Herstellung eines solchen Werkzeuges**

(30) Priorität: 07.10.1997 DE 19744165
(71) Anmelder: FRAUNHOFER-GESELLSCHAFT ZUR FÖRDERUNG DER ANGEWANDTEN FORSCHUNG E.V., 80636 München (DE)
(72) Erfinder: Baumann, Frithjof, 71272 Renningen (DE); Gerner, Jürgen, 88471 Laupheim (DE)
(74) Vertreter: Ludewigt, Christoph; Dr.

(57) **Zusammenfassung**

Die Erfindung betrifft ein Werkzeug zum Herstellen eines Partikelschaumstoff-Formkörpers mit wenigstens einem Werkzeugformteil (12 bzw. 14), in das zumindest ein Teil (18 bzw. 20) eines Formhohlraums (16) eingebracht ist, wobei das Werkzeugformteil (12 bzw. 14) von einem relativ dünnwandigen ersten Formteil (26), das mit wenigstens einem zweiten Formteil (28) verbunden ist, gebildet ist. Um ein verbessertes gattungsgemäßes Werkzeug bereitzustellen, das für die Herstellung eines verbesserten Partikelschaumstoff-Formkörpers geeignet ist und Düsenöffnungen für den heißen Dampf aufweist, wobei das Werkzeug schnell, einfach und entsprechend kostengünstig herstellbar sein soll, selbst wenn der Formhohlraum eine sehr komplexe Form aufweist, wird vorgeschlagen, daß das erste Formteil (26) Düsenöffnungen (22) aufweist, an die sich rohrartige Kanäle (32) des ersten Formteils (26) anschließen und die Kanäle (32) das zweite Formteil (28) durchsetzen. Ein derartiges Werkzeug wird erfindungsgemäß in einem Rapid-Tooling, Rapid-Prototyping oder einem generativen Verfahren, vorzugsweise mittels Stereolithographie, hergestellt.

## Beschreibung

Die Erfindung betrifft ein Werkzeug zum Herstellen eines Partikelschaumstoff-Formkörpers gemäß dem Oberbegriff des Anspruchs 1 sowie ein Verfahren zur Herstellung eines derartigen Werkzeuges.

Zum Herstellen von Partikelschaumstoff-Formkörpern, wie beispielsweise Artikel aus expandiertem Polypropylen (EPP) oder aus ähnlichen expandierbaren polymeren Werkstoffen, z.B. EPE (expandiertes Polyethylen), EPS (expandiertes Polystyrol), PPO (Polyphenyloxid) oder ähnliche Polyolefine, werden Werkzeuge verwendet, die wenigstens ein Werkzeugformteil aufweisen, in das ein Formhohlraum eingebracht ist. In der Regel werden zwei solcher Werkzeugformteile verwendet, welche dann den gemeinsamen Formhohlraum zwischen sich einschließen. In den Formhohlraum werden die einzelnen noch unverbundenen Schaumstoffpartikel, sogenannte 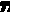 Beads", eingebracht und mit heißen Wasserdampf in dem Formhohlraum zu dem Partikelschaumstoff-Formkörper verschweißt. Der Wasserdampf wird über Dampfdüsen in den Formhohlraum eingesprüht. Ein derartiges Verfahren ist beispielsweise in der Druckschrift WO 95/08433 beschrieben.

Ein derartiges Werkzeug ist zu unterscheiden von einem Spritzgußwerkzeug. Die wesentlichen Unterschiede bestehen darin, daß beim Partikelschäumen erheblich geringere Drücke benötigt werden und ein Werkzeug zum Partikelschäumen Düsenöffnungen aufweisen muß, durch die heißer Dampf zum Verschweißen der Partikel in den Formhohlraum einleitbar ist. Die Düsenöffnungen müssen selbstverständlich in geeigneter Weise Zuleitungen aufweisen, mit denen der heiße Dampf von einem Vorrat zu den Düsenöffnungen durch das Werkzeug hindurch führbar ist.

Die Werkzeugformteile bestehen in der Regel aus Aluminiumguß. Der Formhohlraum ist durch Fräsen, Bohren, Schleifen, Erodieren o.dgl. in das Aluminium eingebracht. Die Dampfdüsen werden nach Fertigstellung des Formhohlraums nachträglich eingesetzt, wobei es wegen der geringen Größe der Dampfdüsen unmöglich ist, diese einzeln einzusetzen. Deshalb werden mehrere Düsen zu sogenannten Nestern zusammengefaßt und die Düsennester dann in den Formhohlraum eingebracht.

Diese bekannten Werkzeugformteile haben mehrere Nachteile. Das mechanische Einbringen des Formhohlraums ist sehr aufwendig, zeitintensiv und entsprechend kostenungünstig. Dies gilt insbesondere, wenn der Formhohlraum eine relativ komplizierte und komplexe Struktur hat, wie dies beispielsweise für einen EPP-Formkörper, wie er in der EP 0546211 B1 offenbart ist, gilt. Die Werkzeuge können dann extrem teuer werden und kommen nur zum Einsatz, wenn entsprechend große Stückzahlen der Partikelschaumstoff-Formkörper hergestellt werden. Änderungen des Formhohlraums eines einmal erstellten Werkzeuges sind wegen der hohen Kosten zumeist nicht praktikabel. Desweiteren sind die Düsen zu Nestern lokal zusammengefaßt, so daß unterschiedliche Bereiche des PartikelschaumstoffFormkörpers ungleich mit Wasserdampf beaufschlagt werden und die 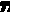 Beads" daher je nach Entfernung zu einem Düsennest unterschiedlich stark miteinander verschweißt sein können.

Aus dem Buch 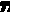 Werkzeuge für die PUR-Verarbeitung", Reihe Kunststoff-technik, VDI-Verlag Düsseldorf 1984, S. 153 bis 167, ist ein Werkzeugformteil für die PUR-Verarbeitung bekannt, das zweigeteilt ist und ein erstes, relativ dünnwandiges Formteil aus Kunstharz, das die eigentliche Negativform für den Formhohlraum bildet, und ein die Stabilität bewirkendes zweites Formteil aus kunstharzgebundenem Alugries, das mit dem ersten Formteil verbunden ist, aufweist.

Ausgehend von diesem Stand der Technik ist es Aufgabe der Erfindung ein verbessertes, gattungsgemäßes Werkzeug bereitzustellen, das für die Herstellung eines verbesserten PartikelschaumstoffFormkörpers geeignet ist und Düsenöffnungen für den heißen Dampf aufweist. Das Werkzeug soll schnell, einfach und entsprechend kostengünstig herstellbar sein, selbst wenn der Formhohlraum eine sehr komplexe Form aufweist. Es ist eine weitere Aufgabe der Erfindung ein Verfahren zur Herstellung eines derartigen Werkzeugs anzugeben.

Diese Aufgabe wird gelöst durch ein gattungsgemäßes Werkzeug mit den kennzeichnenden Merkmalen des Anspruchs 1 sowie ein Verfahren mit den Merkmalen des Anspruchs 7.

Wenn erfindungsgemäß das Werkzeugformteil von einem ersten, relativ dünnwandigen Formteil gebildet ist, ist dies in einem Rapid-Tooling, Rapid Prototyping oder einem generativen Fertigungsverfahren gemäß Anspruch 7 herstellbar. Auf diese Weise lassen sich sehr komplexe Formen, die beispielsweise mit Hilfe von CAD-Verfahren leicht erstellbar sind, ohne Mehraufwand realisieren. Eine Änderung des Werkzeugformteils ist ohne weiteres durch Änderung der CAD-Vorlage möglich. Mit dem erfindungsgemäßen Herstellungsvefahren ist dann schnell, einfach und entsprechend kostengünstig ein neues Werkzeugformteil herstellbar, wobei das erste Formteil den Formhohlraum definiert. Düsenöffnungen für die Einleitung von heißem Wasserdampf sind in beliebiger Verteilung und an beliebigen Stellen in einfacher Weise in das Werkzeug einbringbar. So können die Düsenöffnungen bereits bei der Erstellung der CAD-Vorlage berücksichtigt werden. Die Düsenöffnungen müssen nicht zu Nestern zusammengefaßt sein, da ein Einbringen der Düsenöffnungen nach Fertigstellen des Formhohlraums entfällt.

Wenn sich an die Düsenöffnungen rohrartige Kanäle, die das zweite Formteil durchsetzen, anschließen, kann in einfacher Weise das zweite Formteil beispielsweise in flüssigem Zustand auf das erste Formteil aufgegossen werden, wo es dann aushärtet ohne daß die Düsenöffnungen durch das Ausgießen verschlossen würden. Mehrerer dieser Kanäle können auf ihrer den Düsenöffnungen abgewandten Seite zusammengefasst sein, so daß die derart lokal zusammengefassten Düsen mit einer gemeinsamen Wasserdampfquelle verbunden sein können.

Die Kanäle können auch dazu verwendet werden, das Werkzeug zu temperieren. Dazu könnten gegebenenfalls weitere Kühlkanäle in dem Werkzeug vorgesehen sein.

Darüberhinaus kann über die Düsenöffnungen, beispielsweise ein Lack oder dergleichen, eingebracht werden, so daß die Oberfläche des Partikelschaumstoff-Formkörpers bereits im Werkzeug mit einer Oberflächenschicht versehen werden kann. Auch können die Düsenöffnungen dazu dienen, etwaige chemische Komponenten gleichverteilt in den Formhohlraum einzubringen, um beispielsweise den Verbindungsprozess der 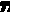 Beads" zu beschleunigen oder den Partikelschaumstoff-Formkörper zu stabilisieren oder zu härten.

Ebenso können die Düsenöffnungen dazu verwendet werden, das Entweichen oder Abführen von Gasen oder Dämpfen, die eventuell bei der Herstellung des Partikelschaumstoff-Formkörpers entstehen, zu ermöglichen.

Durch beispielsweise eine im wesentlichen gleichförmige Verteilung der Düsenöffnungen auf der Oberfläche des Formhohlraums läßt sich eine bessere Verschweißung der 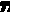 Beads" erreichen. Auch kann eine verbesserte Oberfläche des im Werkzeug gebildeten Partikelschaumstoff-Formkörpers erreicht werden und zwar ohne ein zusätzliches, in den Formhohlraum eingelegtes Gitter, wie es die Druckschrift WO 95/08433 noch offenbart.

Die Düsenöffnungen können eine vorbestimmte Geometrie und/oder Größe aufweisen und/oder können in einer vorbestimmten Anordnung auf dem ersten Formteil verteilt sein, so daß dadurch Muster und/oder Firmenlogos und/oder Produktionsdaten oder sonstige Informationen auf der Oberfläche des herzustellenden Werkstückes dargestellt werden können.

In einer bevorzugten Ausgestaltung der Erfindung ist das erste Formteil schalenartig ausgebildet, wobei der Formhohlraum auf der Außenseite des schalenartigen Formteils liegt. Somit kann das zweite Formteil auf einfache Weise mit dem ersten Formteil verbunden werden, indem ein das zweite Formteil bildende Material in flüssigem Zustand in das schalenartige erste Formteil gegossen und dort aushärtet. Das Aushärten kann durch Tempern oder durch eine geeignete chemische Reaktion des das zweite Formteil bildenden Materials, das aus einer oder mehreren Komponenten gebildet sein kann, geschehen. Beim Ausgießen des ersten Formteils ist durch die rohrartigen Kanäle gewährleistet, daß auch beim Auffüllen des schalenartigen ersten Formteils die Düsenöffnungen erhalten bleiben.

Ein kostengünstiges Material für die Formteile ist ein verzugsarmes Harz. Ein Harz stellt auch ein geeignetes Material dar, um das erste Formteil im Stereolithographie-Verfahren gemäß Anspruch 8 herstellen zu können. Alternative Materialien, die ebenfalls für die Stereolithographie geeignet sind, sind Acrylate oder Vinylether oder Gemische dieser Substanzen. Die Stereolithographie ist ein kostengünstiges Verfahren zum einfachen und schnellen Erstellen komplexer Strukturen, also komplexer Formhohlräume. Eine mögliche Alternative zur Stereolithographie wäre das Sintern mittels Laser, wobei dann als Material jedoch ein Polymerpulver oder ein Metall/Keramik/Composite-Pulver oder dergleichen anstelle eines Harzes eingesetzt würde. Ein Hart hat noch den weiteren Vorteil, daß dadurch das Werkeugformteil eine gewisse wärmeisolierende Wirkung hat. Dadurch können sich Vorteile bei der Verschmelzung der 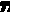 Beads" ergeben, da die zum Verschmelzen notwendige Wärme im Werkzeug besser erhalten bleibt.

Bevorzugt bestehen das erste und/oder das zweite Formteil aus einem Epoxidharz. Dabei kann das Harz des zweiten Formteils Metalle oder ähnliche Füllstoffe aufweisen, um die Steifigkeit des zweiten Formteils und damit des Werkzeugformteils zu verbessern.

Das Werkzeugformteil des erfindungsgemäßen Werkzeugs ist nicht nur für die beschriebene Herstellung von Partikelschaumstoff-Formkörpern geeignet, sondern über die Düsenöffnungen könnte auch ein Unterdruck an den Formhohlraum angelegt werden, so daß das Werkzeugformteil auch als Formteil für ein Tiefziehverfahren geeignet wäre. Dabei ergeben sich die gleichen Vorteile, wie sie oben beschrieben sind, nämlich die schnelle und einfache Herstellung eines kostengünstigen Formteils mit einer beliebig komplexen Form, jetzt allerdings für das Tiefziehverfahren.

Im folgenden wird die Erfindung anhand eines Ausführungsbeispiels unter Bezugnahme auf die Zeichnung im einzelnen erläutert. Es zeigen:
- **Fig. 1**: eine schematische Darstellung eines erfindungsgemäßen Werkzeugs und
- **Fig. 2**: eine schematische Darstellung der Verfahrensschritte eines erfindungsgemäßen Verfahrens zur Herstellung eines Werkzeugformteils gemäß Fig.1.

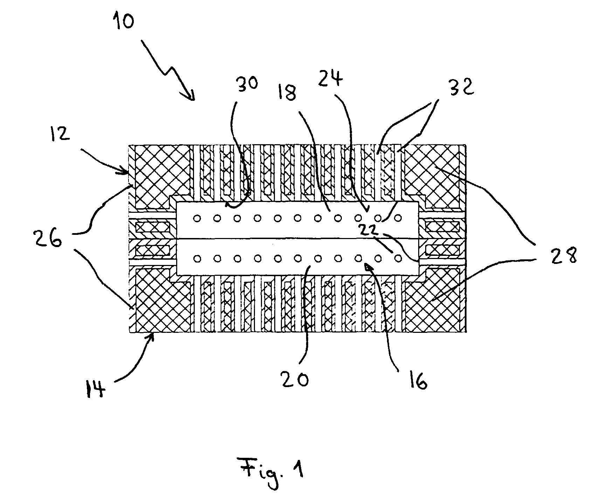

Ein in der Fig. 1 dargestelltes, erfindungsgemäßes Werkzeug 10 zum Herstellen von Partikelschaumstoff-Formkörpern weist wenigstens ein Werkzeugformteil 12 bzw. 14 auf. In der Regel besteht das Werkzeug 10 aus zwei Werkzeugformteilen 12 und 14, die zwischen sich einen Formhohlraum 16 einschließen. In dem dargestellten Ausführungsbeispiel ist je ein Teil 18 bzw. 20 des Formhohlraums 16 in das Werkzeugformteil 12 bzw. 14 eingebracht. In den Formhohlraum 16, der die Form eines zu erzeugenden Schaumstoff-Formkörpers hat, sind Schaumstoffpartikel, sogenannnte 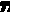 Beads", eines bestimmten polymeren Werkstoffes, beispielsweise expandiertes Polypropylen (EPP) oder ähnliche expandierte Polyolefine, wie EPE (expandiertes Polyethylen), EPS (expandiertes Polystyrol) oder PPO (Polyphenyloxid), über eine nicht näher dargestellte Befüllungsöffnung einbringbar. Über Düsenöffnungen 22, die auf einer Oberfläche 24 des Formhohlraums 16 bevorzugt gleichverteilt sind, ist heißer Wasserdampf in den Formhohlraum 16 sprühbar, so daß durch den Wasserdampf die 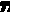 Beads" miteinander zur Bildung des Formkörpers verschweißbar sind. Der fertige Partikelschaumstoff-Formkörper ist mittels nicht dargestellten Auswerfern nach Auseinanderfahren der Werkzeugformteile 12 und 14 aus dem Werkzeug 10 auswerfbar.

Das Werkzeugformteil 12 bzw. 14 weist ein erstes Formteil 26 auf, das relativ dünnwandig und bevorzugt schalenartig ausgebildet ist. Der Teil 18 bzw. 20 des Formhohlraums 16 wird von dem ersten Formteil 26 gebildet, wobei der Formhohlraum 16 auf der Außenseite 30 des schalenartigen Formteils 26 liegt.

Das Werkzeugformteil 12 bzw. 14 weist wenigstens ein weiteres, zweites Formteil 28 auf. Das zweite Formteil 28 ist im Inneren des schalenartigen ersten Formteils 26 angeordnet und mit diesem zur Bildung des Werkzeugformteils 12 bzw. 14 verbunden.

An die Düsenöffnungen 22 schließen sich rohrartige Kanäle 32 an, die einstückig mit dem ersten Formteil 26 ausgebildet sind. Die Kanäle 32 durchsetzen das zweite Formteil 28 vollständig. In einer Ausgestaltung der Erfindung sind mehrere der Kanäle lokal zusammengefasst, so daß die derart zusammengefassten Kanäle von den Düsenöffnungen 22 ausgehend jeweils in einen gemeinsamen Kanal münden.

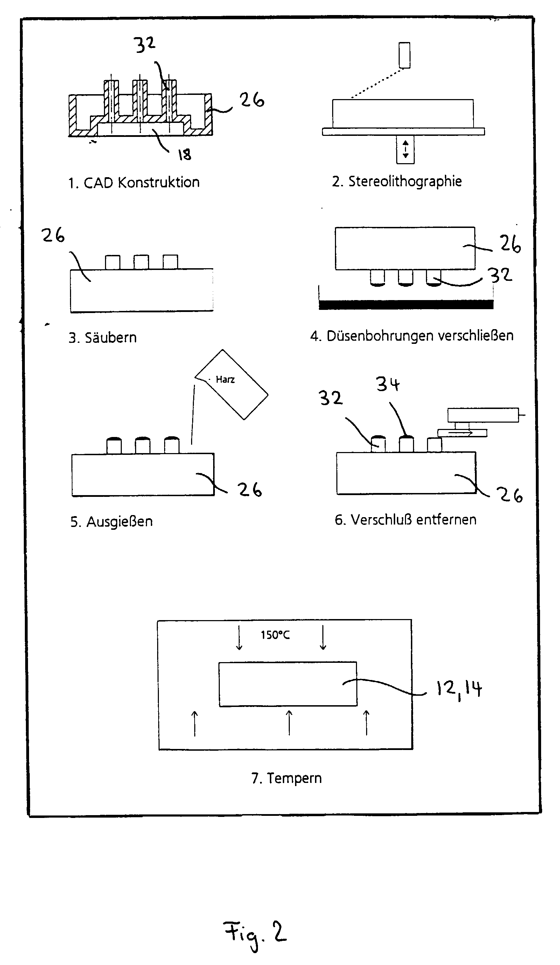

Das Werkzeugformteil 12 bzw. 14 des erfindungsgemäßen Werkzeugs 10 kann in einem in Fig.2 dargestellten Verfahren, hergestellt werden:

In einem ersten Schritt wird das erste Formteil 26, das den Teil 18 des Formhohlraums 16 bildet, auf einem Computer, beispielsweise im CAD-Verfahren, erstellt. Dann wird in einem zweiten Schritt im Rapid-Tooling, Rapid-Prototyping oder in einem generativen Verfahren, vorzugsweise mittels computergesteuerter Stereolithographie, das erste Formteil 26 gebildet. Für die Erstellung des ersten Formteils 26 in Stereolithographie wird bevorzugt ein verzugsarmes Harz, vorzugsweise ein Epoxidharz, verwendet. Alternativ sind andere, für die Stereolithographie geeignete Materialien, wie beispielsweise Acrylate oder Vinylether oder eine Mischung davon, einsetzbar. Da für die Stereolithographie geeignete Harze relativ teuer sind, ist das erste Formteil 26 relativ dünnwandig ausgebildet. Dadurch ergibt sich der weitere Vorteil, daß das erste Formteil 26 schnell und wirtschaftlich hergestellt werden kann.

In einem dritten Schritt wird das erste Formteil 26 gesäubert und in einem vierten Schritt werden die rohrartigen Kanäle 32 an ihrem dem Formhohlraum 16 abgewandten Ende verschlossen, damit die Kanäle 32 in weiteren Verfahrensschritten nicht verstopfen können.

In einem fünften Verfahrensschritt wird das zweite Formteil 28 gebildet, indem das schalenartige, erste Formteil 26 mit einem das zweite Formteil 28 bildenden Material, vorzugsweise mit einem verzugsarmen Epoxidharz, ausgegossen wird. Dann werden in einem sechsten Schritt die im vierten Schritt verschlossenen und das zweite Formteil 28 durchsetzenden Kanäle 32 wieder geöffnet, indem der Verschluß 34 entfernt wird.

In einem letzten, siebenten Verfahrensschritt wird das in das erste Formteil eingefüllte Material ausgehärtet. Die Aushärtung kann entweder durch eine chemische Reaktion zweier, das zweite Formteil 28 bildenden Materialien oder durch Tempern erfolgen. Das Aushärten mittels Tempern ist bevorzugt, da dann das Material gleichmäßiger aushärtet. Das Tempern erfolgt, je nach Art des Füllharzes, bei einer geeigneten Aushärtetemperatur.

Auch wäre es denkbar, daß die das erste und/oder zweite Formteil bildenden Materialien durch Bestrahlung mit elektromagnetischer Strahlung aushärten, beispielsweise durch Mikrowellen oder UV-Licht. Dann müßten die Materialien entsprechende optische Eigenschaften aufweisen, so daß beispielsweise die für das Aushärten des zweiten Formteils benötigte Strahlung nicht bereits von dem ersten Formteil absorbiert wird. Ebenso können die 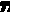 Beads" des PartikelschaumstoffFormkörpers durch Strahlung verschmolzen und/oder stabilisiert werden. Dann muß das Werkzeug und damit das erste und zweite Formteil für die Strahlung durchlässig sein.

Weiter wäre es möglich, das erfindungsgemäße Werkzeug in einem Verfahren herzustellen, bei dem zunächst mittels Rapid-Prototyping ein Modell des Partikelschaumstoff-Formkörpers erstellt wird. Das Modell kann dabei bereits die 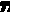 Negativform" der Düsenöffnungen mit aufweisen. Danach wird das erste Formteil des Werkzeugformteils durch Abguß erhalten. Nach Entfernen des Modells aus dem ausgehärteten Formteil ist das Werkzeugformteil erhalten. Auf diese Weise lassen sich erfindungsgemäße Werkzeuge aus metallischen Materialien im sogenannten 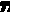 Investment Casting" Verfahren erstellen.

## Patentansprüche

1. Werkzeug zum Herstellen eines Partikelschaumstoff-Formkörpers mit wenigstens einem Werkzeugformteil (12 bzw. 14), in das zumindest ein Teil (18 bzw. 20) eines Formhohlraums (16) eingebracht ist, wobei das Werkzeugformteil (12 bzw. 14) von einem relativ dünnwandigen ersten Formteil (26), das mit wenigstens einem zweiten Formteil (28) verbunden ist, gebildet ist, dadurch gekennzeichnet, daß das erste Formteil (26) Düsenöffnungen (22) aufweist, an die sich rohrartige Kanäle (32) des ersten Formteils (26) anschließen und die Kanäle (32) das zweite Formteil (28) durchsetzen.

2. Werkzeug nach Anspruch 1, dadurch gekennzeichnet, daß die Düsenöffnungen (22) auf der Oberfläche des Formhohlraums (16) im wesentlichen gleichverteilt sind.

3. Werkzeug nach Anspruch 1, dadurch gekennzeichnet, daß die Düsenöffnungen (22) auf der Oberfläche des Formhohlraums (16) in Form eines Musters angeordnet sind.

4. Werkzeug nach einem der vorhergehenden Ansprüche, dadurch gekennzeichnet, daß das erste Formteil (26) schalenartig ausgebildet ist, wobei der Formhohlraum (16) auf der Außenseite (30) des schalenartigen Formteils (26) liegt.

5. Werkzeug nach einem der vorhergehenden Ansprüche, dadurch gekennzeichnet, daß das erste und/oder das zweite Formteil (26 und/oder 28) aus einem verzugsarmen Harz bestehen.

6. Werkzeug nach einem der vorhergehenden Ansprüche, dadurch gekennzeichnet, daß das erste und/oder das zweite Formteil (26 und/oder 28) aus einem Epoxidharz bestehen.

7. Verfahren zur Herstellung eines Werkzeuges zum Herstellen eines Partikelschaumstoff-Formkörpers nach einem der vorhergehenden Ansprüche, dadurch gekennzeichnet, daß das erste Formteil (26) in einem Rapid-Tooling oder Rapid-Prototyping Verfahren oder einem generativen Fertigungsverfahren hergestellt wird und daß die Düsenöffnungen (22) bei der Herstellung gezielt mit eingebracht werden und daß ein das zweite Formteil (28) bildende Material in flüssigem Zustand in das erste schalenartige Formteil (26) eingefüllt und dann ausgehärtet wird.

8. Verfahren nach Anspruch 7, dadurch gekennzeichnet, daß das erste Formteil (26) mittels Stereolithographie hergestellt wird.
